# EUROPÄISCHE PATENTSCHRIFT

(11) **EP 1 135 878 B1**
(45) Veröffentlichungstag und Bekanntmachung des Hinweises auf die Patenterteilung: **24.07.2002**
(21) Anmeldenummer: 98955306.0
(22) Anmeldetag: 02.12.1998
(51) Int. Cl.: H04H 1/00, H04H 9/00, H04N 7/088, G08G 1/09, G08G 1/0969, G01C 21/20, G01S 5/14, H04N 7/16

(54) **MOBILGERAT UND VERFAHREN ZUM EMPFANGEN UND FILTERN AUS DEN PROGRAMMBEGLEITENDEN DATEN AUF GRUND DER BESTIMMTEN POSITION**
MOBILE APPARATUS AND METHOD FOR RECEIVING AND FILTERING FROM PROGRAM-ACCOMPANYING DATA ON THE BASIS OF A DEFINED POSITION
APPAREIL MOBILE ET PROCEDE DE RECEPTION ET DE FILTRAGE A PARTIR DE DONNEES ACCOMPAGNANT UNE EMISSION RADIO SUR LA BASE DE LA POSITION DEFINIE

(43) Veröffentlichungstag der Anmeldung: 26.09.2001
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9800512
(87) Internationale Veröffentlichungsnummer: WO0033493

(56) Entgegenhaltungen:
- EP-A- 0 731 574
- EP-A- 0 814 447
- EP-A- 0 817 414
- WO-A-99/21306
- DE-A- 19 640 735
- US-A- 5 432 542

## Beschreibung

Die vorliegende Erfindung betrifft ein Mobilgerät und ein Verfahren zum Empfangen und Verarbeiten von programmbegleitenden Daten. Insbesondere betrifft die vorliegende Erfindung ein Mobilgerät und ein Verfahren zum Empfangen und Verarbeiten von programmbegleitenden digitalen Daten, die von einem Radiosender ausgestrahlt werden und von denen mindestens gewisse Daten Ortsparameter umfassen.

Vorrichtungen mit einem Radio- oder Fernsehempfänger zum Empfang von programmbegleitenden Daten und einer Anzeige zur Darstellung von empfangenen programmbegleitenden Daten sind bekannt und auf dem Markt erhältlich. Insbesondere sind solche Vorrichtungen erhältlich für digitale Radiosysteme DAB (Digital Audio Broadcasting) oder für andere Radiosysteme wie FM-SWIFT oder FM-DARC, oder für Fernsehempfänger mit Teletext, welche typischerweise alle unidirektional arbeiten. Mit solchen Vorrichtungen können zwar Informationen empfangen und angezeigt werden, ein Benutzer kann aber nicht gezielt Informationen empfangen, die nur von ihm gewählte Themen betreffen und/oder die nur für seinen aktuellen Standort relevant sind.

In der europäischen Patentanmeldung EP 259 717 wird ein Verfahren beschrieben, in welchem zu Werbezwecken programmbegleitende Daten mit inhaltsspezifischen Codes versehen und ausgesendet werden. Ein Benutzer kann gezielt Informationen zu einem oder mehreren Sachgebieten empfangen, beispielsweise Immobilienwerbung, indem er einen tragbaren Empfänger mit den entsprechenden Codes programmiert. Das in EP 259 717 beschriebene Verfahren bietet allerdings einem Benutzer keine Möglichkeit mit seinem tragbaren Empfänger gezielt Daten zu empfangen, die seinen aktuellen Standort betreffen.

In der Patentanmeldung DE 196 40 735 wird ein Telematikgerät für den Einbau in den genormten Schacht am Armaturenbrett von Kraftfahrzeugen vorgeschlagen, in dem ein Autoradio mit einem RDS-Modul, ein Funktelefon sowie ein Ortungs- und Navigationssystem in einem Gehäuse angeordnet sind. Das in DE 196 40 735 beschriebene Telematikgerät sendet Positionsangaben und Zielangaben an eine Zentrale, die eine Fahrtroute berechnet und diese Fahrtroute zur optischen Darstellung auf einer Anzeige an das Telematikgerät. sendet Das Telematikgerät gemäss DE 196 40 735 kann zudem mit einer CD-ROM und einer darauf gespeicherten digitalen Karte versehen sein, so dass die aktuelle Fahrzeugposition mitgekoppelt und auf der digitalen Karte auf der Anzeige angezeigt werden kann. Die von der Zentrale berechneten Fahrtrouten können ebenfalls im Telematikgerät gemäss DE 196 40 735 auf der digitalen Karte auf der Anzeige angezeigt werden. Das Telematikgerät gemäss DE 196 40 735 kann zudem so eingerichtet sein, dass es auf Grund der aktuellen Verkehrssituation, welche jeweils Ober verschiedene ortsspezifische Verkehrsmeldungskanäle empfangen wird, optimale Fahrtrouten berechnet.

In der Patentschrift US 5432542 wird ein System und ein Verfahren beschrieben, die es ermöglichen ortsspezifische Meldungen, die über Femsehoder Radiokanäle verbreitet werden gezielt zu empfangen. Gemäss der Lehre von US 5432542 werden durch den Benutzer ein oder mehrere Codes mit Orten, die für den Benutzer von Interesse sind, in ein Endgerät programmiert, das mit dem entsprechenden Femseh- oder Radioempfänger verbunden ist, so dass die empfangenen ortsspezifischen Meldungen im Endgerät gemäss diesen programmierten Codes gefiltert werden können.

Es ist die Aufgabe dieser Erfindung, ein neues Mobilgerät und ein neues Verfahren zum Empfangen und Verarbeiten von programmbegleitenden Daten vorzuschlagen, welche es insbesondere ermöglichen, gezielt standortspezifische Informationen zu empfangen und zu verarbeiten.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass ein Mobilgerät, beispielsweise ein Mobilfunktelefon, ein Palmtop- oder ein Laptop-Computer, welches einen Radioempfänger umfässt, der Radioprogramme mit programmbegleitenden digitalen Daten empfangen kann, wobei mindestens gewisse der empfangenen programmbegleitenden Daten Ortsparameter umfassen, ein Positionsbestimmungsmodul und ein Filtermodul umfasst, wobei das Filtermodul aus den empfangenen programmbegleitenden Daten auf Grund einer aktuellen, durch das Positionsbestimmungsmodul bestimmten Position standortspezifische Informationen filtern kann. Dies hat den Vorteil, dass ein Benutzer dieses Mobilgeräts gezielt mit standortspezifischen Informationen versorgt werden kann.

In verschiedenen Ausführungsvarianten umfasst das Positionsbestimmungsmodul ein satellitenbasiertes Positionierungssystem, beispielsweise einen Empfänger für das Globale Positionierungssystem (GPS), oder ein terrestrisches Positionierungssystem oder es kann Positionsangaben aus einem Mobilnetz, beispielsweise ein GSM- oder UMTS-Netz, beziehen.

Vorzugsweise umfasst das Mobilgerät ein Speichermodul, in welchem ein Benutzerprofil gespeichert werden kann, auf Grund von welchem Benutzerprofil empfangene programmbegleitende Daten durch das genannte Filtermodul gefiltert werden können. Dies hat den Vorteil, dass der Benutzer des Mobilgeräts gezielt bestimmte Informationen aus den empfangenen programmbegleitenden Daten herausfiltem kann, wobei dies in Kombination mit dem Filtem von standortspezifischen Informationen ausgeführt werden kann. Der Benutzer kann beispielsweise im Benutzerprofil gezielt bestimmte Kategorien oder Sachgebiete definieren, für die er sich interessiert, so dass ihm aus den empfangenen programmbegleitenden Daten standortspezifische Informationen zu diesen Kategorien oder Sachgebieten gefiltert werden. Es kann auch vorgesehen werden, dass im Benutzerprofil der bei der Filterung von standortspezifischen Informationen zu berücksichtigende Bereich, beispielsweise der Radius um den aktuellen Standort, definiert werden kann.

Vorzugsweise umfasst das Mobilgerät eine Anzeige, auf welcher gefilterte programmbegleitende Daten angezeigt werden können.

Vorzugsweise umfasst das Mobilgerät Bedienungselemente, mittels welchen gefilterte programmbegleitende Daten selektiert und editiert werden können.

Vorzugsweise umfasst das Mobilgerät ein Kommunikationsmodul, mittels welchem selektierte, gefilterte programmbegleitende Daten an eine Dienstzentrale übermittelt werden können, beispielsweise in speziellen Kurzmeldungen wie SMS- (Short Message Services) oder USSD-Kurzmeldungen (Unstructured Supplementary Services Data) über ein GSM- oder UMTS-Netz, wobei die Dienstzentrale beispielsweise eine Kurzmeldungsdienstzentrale (Short Message Service Centre, SMSC) ist. Dies hat den Vorteil, dass dadurch eine Mehrwegkommunikation realisiert werden kann, die durch das unidirektionale Aussenden von programmbegleitenden Daten eingeleitet wird.

In einer Ausführungsvariante enthalten mindestens gewisse der empfangenen programmbegleitenden Daten eine Bestellnummer, welche eine Produkteidentifizierung und eine zugehörige Lieferantenidentifizierung umfasst, und das genannte Mobilgerät umfasst ein Kommunikationsmodul, mittels welchem eine selektierte Bestellnummer an den durch die genannte Bestellnummer identifizierten Lieferanten geleitet wird, wobei die Bestellnummer an eine Dienstzentrale übermittelt wird, beispielsweise in speziellen Kurzmeldungen wie SMS- (Short Message Services) oder USSD-Kurzmeldungen (Unstructured Supplementary Services Data) über ein GSM- oder UMTS-Netz, wobei die Dienstzentrale beispielsweise eine Kurzmeldungsdienstzentrale (Short Message Service Centre, SMSC) ist, in welcher Dienstzentrale die Bestellnummer mit Benutzeridentifikationsdaten des Benutzers des genannten Mobilgeräts verknüpft wird, und die verknüpften Daten an den genannten Lieferanten geleitet werden.

In einer Ausführungsvariante enthalten mindestens gewisse der empfangenen programmbegleitenden Daten eine URL-Adresse und das Mobilgerät umfasst ein Kommunikationsmodul, mittels welchem eine durch die genannte URL-Adresse adressierte Resource im Internet angesteuert werden kann.

In einer Ausführungsvariante enthalten mindestens gewisse der empfangenen programmbegleitenden Daten ausführbare Programmdateien, die in einem Verarbeitungsmodul des Mobilgeräts ausgeführt werden können.

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Übersichtsdiagramm mit einem Radiosender und einem Mobilgerät, welches mit einem Mobilnetz verbunden ist, an das eine Dienstzentrale mit Zugang zu Dienstanbietem angeschlossen ist.
Figur 2 zeigt ein Blockdiagramm eines Mobilgeräts mit einem Radioempfänger, einem Positionsbestimmungsmodul, einem Filtermodul, einem Kommunikationsmodul, einem Verarbeitungsmodul, einem Speichermodul, einer Anzeige und Bedienungselementen.

Im nachfolgenden Ausführungsbeispiel bezieht sich das Bezugszeichen 1 auf einen Radiosender, der programmbegleitende Daten senden kann, beispielsweise ein Sender einer landesweiten oder lokalen Radiostation oder ein Sender zur Abdeckung eines eng beschränkten geografischen Gebiets, zum Beispiel ein Messe- oder Ausstellungsgelände. Der Radiosender 1 ist zum Beispiel ein FM-Sender, welcher insbesondere auch programmbegleitende digitale Daten senden kann. Die Übertragung von programmbegleitenden Daten zusätzlich zum Radioprogramm wird vor allem im digitalen Radiosystem DAB (Digital Audio Broadcasting) oder in anderen Radiosystemen wie FM-SWIFT oder FM-DARC verwendet. Die DAB-Technologie, zum Beispiel, ermöglicht es, sowohl Radioprogramme als auch programmbegleitende Dienste (Program Associated Data, PAD) zu übertragen. Beispielsweise können mittels DAB Daten in acht adressierbaren Kanälen mit einer Kapazität von jeweils 150 kbits übertragen werden, wobei die Adressierung dieser Kanäle es ermöglicht, Daten an einen separat adressierten Empfänger, an eine definierte Gruppe von mehreren Empfängern (Multicast), oder an alle Empfänger zu senden (Broadcast).

Gemäss der vorliegenden Erfindung umfassen mindestens gewisse der vom Radiosender 1 ausgesendeten programmbegleitenden Daten Ortsparameter, die eine geografische Position und/oder Bereich definieren, für welche die betreffenden programmbegleitenden Daten relevant und/oder interessant sind. Zum Beispiel umfassen die Ortsparameter geografische Koordinaten, die einen bestimmten Stand in einem Messe- oder Ausstellungsgelände definieren oder sich auf eine bestimmte Verkaufsstelle und/oder Vertretung von Produkten und/oder Dienstleistungen beziehen.

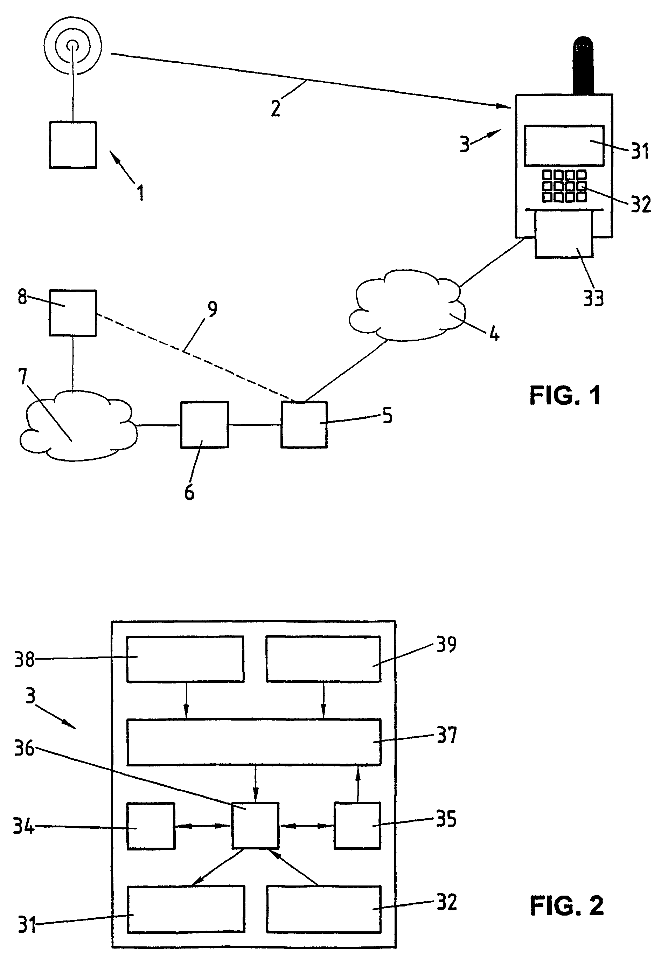

Wie mit dem vom Radiosender 1 ausgehenden unidirektionalen Pfeil 2 angedeutet, werden die programmbegleitenden digitalen Daten, beispielsweise Werbeinformationen über Produkte und/oder Dienstleistungen oder ausführbare Programmdateien, zusammen mit eventuellen Audioprogrammen vom Sender 1 verbreitet und beispielsweise von einem Mobilgerät 3 mit einem entsprechenden Radioempfänger 38 (siehe Figur 2) empfangen. Der Radioempfänger 38 ist beispielsweise ein DAB-Radioempfänger oder ein Radioempfänger zum Empfang von programmbegleitenden Daten gemäss FM-SWIFT, FM-DARC oder gemäss einem anderen Verfahren.

In einer möglichen Ausführung wird ein gesendetes und empfangenes Audiosignal vom Radioempfänger 38 an einen nicht dargestellten Verstärker weitergeleitet, beispielsweise ein dem Fachmann bekannter Niederfrequenzverstärker von diesem verstärkt und das verstärkte elektrische Signal an einen, oder mehrere nicht dargestellte Lautsprecher oder an eine nicht dargestellte Verbindungsbuchse zum Anschliessen eines Kopfhörers angelegt.

Obwohl sich das beschriebene Ausführungsbeispiel auf einen Radiosender und einen Radioempfänger bezieht, sollte gleich eingangs erwähnt werden, dass in einer anderen Ausführungsvariante anstatt eines Radiosenders, der Audioprogramme mit programmbegleitenden Daten aussendet, ein Fernsehsender eingesetzt werden kann, der Fernsehprogramme mit programmbegleitenden Daten aussendet, beispielsweise Teletext Informationen, welche von einem entsprechenden Fernsehempfänger 38 empfangen werden, wobei das Videoprogramm beispielsweise auf einem Femsehbildschirm 31 eines Mobilgeräts 3, zum Beispiel eine konventionelle elektronische Bildröhre, ein LCD- oder Plasma-Display, oder über ein virtuelles Retina Display, angezeigt werden kann.

Wie in der Figur 2 dargestellt wird, leitet der Radioempfänger 38 die empfangenen programmbegleitenden digitalen Daten über eine schematisch dargestellte Verbindung an ein Filtermodul 37 weiter.

Gemäss der vorliegenden Erfindung verfügt das Mobilgerät 3 zudem über ein Positionsbestimmungsmodul 39, welches die aktuelle geografische Position (des Mobilgeräts 3) bestimmen kann. Eine Positionsbestimmung kann beispielsweise periodisch oder auf Verlangen durchgeführt werden, beispielsweise auf Verlangen eines anderen Moduls des Mobilgeräts 3, zum Beispiel das Filtermodul 37, oder auf Verlangen des Benutzers des Mobilgeräts, der dies zum Beispiel mittels der Bedienungselemente 32 als Befehl eingibt, worauf ihm die bestimmte aktuelle Position auf einer Anzeige 31 des Mobilgeräts 3 angezeigt wird. Das Positionsbestimmungsmodul 39 funktioniert beispielsweise gemäss einem bekannten satellitenbasierten Positionierungssystem, insbesondere das Differential Global Positioning System (GPS) und umfasst entsprechend einen bekannten GPS-Empfänger. In einer Ausführungsvariante funktioniert das Positionsbestimmungsmodul 39 gemäss einem terrestrischen Positionierungssystem oder es bezieht Positionsangaben aus einem Mobilnetz 4. Im letzteren Fall ist das Mobilgerät 3 ein Mobilfunkgerät, welches ein Kommunikationsmodul 34 umfasst um in einem Mobilnetz 4 zu kommunizieren, beispielsweise ein GSM- oder UMTS-Netz.

Wie in der Figur 2 dargestellt wird, leitet das Positionsbestimmungsmodul 39 die bestimmte aktuelle Position über eine schematisch dargestellte Verbindung an das Filtermodul 37 weiter.

Das Filtermodul 37 ist beispielsweise ein programmiertes Softwaremodul, welches in einem Prozessor des Mobilgeräts 3 ausgeführt wird und in einem Programmspeicher des Mobilgeräts 3 abgespeichert ist. In einer Ausführungsvariante befinden sich der Prozessor und der Programmspeicher zur Speicherung und Ausführung des Filtermoduls 37 auf einer Chipkarte 33 des Mobilgeräts 3, zum Beispiel eine Identifikationskarte 33 des Mobilgeräts 3, beispielsweise eine SIM-Karte (Subscriber Identification Module). Das Filtermodul 37 nimmt die empfangenen programmbegleitenden Daten vom Radioempfänger 38 sowie die bestimmte aktuelle Position vom Positionsbestimmungsmodul 39 entgegen und vergleicht die in den programmbegleitenden Daten enthaltenen Ortsparameter, beispielsweise geografische Koordinaten, mit der aktuellen Position. Falls die Ortsparameter und die aktuelle Position übereinstimmen, können die betreffenden programmbegleitenden Daten als standortspezifische Informationen an ein Verarbeitungsmodul 36 weitergeleitet werden. Eine Übereinstimmung liegt beispielsweise vor, wenn die geografischen Koordinaten der empfangenen Ortsparameter und der bestimmten aktuellen Position identisch sind oder dessen Differenz sich innerhalb eines vordefinierten Bereichs befindet, welcher Bereich beispielsweise auch vom Benutzer in einem Benutzerprofil gesetzt werden kann, welches Benutzerprofil unten näher beschrieben wird. Programmbegleitende Daten, die keine Ortsparameter enthalten oder deren Ortsparameter nicht mit der aktuellen Position übereinstimmen, können vom Filtermodul 37 beispielsweise ignoriert werden.

Die Filterfunktion des Filtermoduls 37 kann zusätzlich auch durch Parameter eines in einem Speichermodul 35 abgespeicherten Benutzerprofils bestimmt werden. Das Benutzerprofil 35 ist beispielsweise eine Tabelle mit Schlüsselwörtern, die zum Beispiel bestimmte Kategorien oder Sachgebiete von Informationen definieren, für welche sich der betreffende Benutzer interessiert. Das Benutzerprofil 35 kann beispielsweise auch vom Benutzer eingegebene Informationen enthalten, die die Filterung von standortspezifischen Informationen beeinflussen, zum Beispiel kann der Benutzer einen geografischen Bereich definieren, beispielsweise einen Bereichsradius, der vom Filtermodul 37 bei der Filterung von standortspezifischen Informationen in Abhängigkeit der aktuellen Position berücksichtigt werden soll, oder der Benutzer kann beispielsweise die Filterung von standortspezifischen Informationen ausschalten. Das Benutzerprofil 35 kann beispielsweise vom Benutzer mittels eines entsprechenden Softwareprogramms im Verarbeitungsmodul 36 aufgesetzt werden, wobei dieses Softwareprogramm vom Benutzer mittels der Bedienungselemente 32 eingegebene Befehle entgegennehmen und eingegebene Werte, Funktionsmenus und den Inhalt des Benutzerprofils 35 auf einer Anzeige 31 des Mobilgeräts 3 darstellen kann. Das Benutzerprofil 35 kann auch in einem ausführbaren Programm-Applet integriert sein, zum Beispiel ein Java-Applet, und kann vom Benutzer beispielsweise extern aufgesetzt und editiert werden, zum Beispiel in einem Personal Computer, wobei ein extern definiertes und/oder editiertes Applet beispielsweise mittels speziellen Kurzmeldungen, zum Beispiel USSD oder SMS-Kurzmeldungen, in das Mobilgerät 3 geladen werden kann. Wie wir später beschreiben werden, umfasst das genannte Verarbeitungsmodul 36 zudem weitere Softwareprogramme und -funktionen und wird auf einem Prozessor des Mobilgeräts 3 ausgeführt und in einem Programmspeicher des Mobilgeräts 3 gespeichert. In einer Ausführungsvariante befinden sich der Prozessor und der Programmspeicher zur Speicherung und Ausführung des Verarbeitungsmoduls 36 auf einer Chipkarte 33 des Mobilgeräts 3, beispielsweise eine ldentifikationskarte 33 des Mobilgeräts 3, zum Beispiel eine SIM-Karte.

Das Verarbeitungsmodul 36 nimmt mittels einer Softwarefunktion die vom Filtermodul 37 gefilterten standortspezifischen Informationen, die zudem vom Filtermodul auf die im Benutzerprofil 35 gesetzten Informationsgebiete eingeschränkt sind, entgegen und stellt sie beispielsweise auf der Anzeige 31 des Mobilgeräts 3 dar. Entsprechende Softwarefunktionen im Verarbeitungsmodul 36 nehmen vom Benutzer mittels der Bedienungselemente 32 eingegebene Befehle zum Durchblättern, Selektieren und/oder Editieren der dargestellten gefilterten Informationen entgegen und führen entsprechend den eingegebenen Befehlen die auf der Anzeige 31 dargestellten Informationen nach. Abhängig vom Inhalt der gefilterten programmbegleitenden Daten stellt das Verarbeitungsmodul 36 für vom Benutzer selektierte Daten auf der Anzeige 31 ein Menu mit möglichen weiteren Funktionen für die betreffenden Daten dar oder, falls nur eine bestimmte Funktion zur Wahl steht, verlangt vom Benutzer eine Bestätigung, ob die betreffende Funktion für die selektierten Daten ausgeführt werden soll.

Insbesondere können empfangene und gefilterte standortspezifische Daten beispielsweise vom Verarbeitungsmodul 36 einem Kommunikationsmodul 34 des Mobilgeräts zur Übermittlung an eine Dienstzentrale 5 übergeben werden. Das Kommunikationsmodul 34 umfasst beispielsweise bekannte Komponenten um in einem Mobilnetz 4, beispielsweise ein GSM- oder UMTS-Netz, zu kommunizieren und um in diesem Mobilnetz 4 spezielle Kurzmeldungen, beispielsweise SMS- oder USSD-Meldungen, zu übermitteln. Die Dienstzentrale 5 umfasst beispielsweise eine bekannte Kurzmeldungsdienstzentrale (Short Message Service Centre, SMSC), welche an das Mobilnetz 4 angeschlossen ist und über dieses Mobilnetz 4 übertragene Kurzmeldungen entgegennehmen und verarbeiten kann. Dies ermöglicht beispielsweise eine Auftragsabwicklung zwischen dem Kommunikationsmodul 34 und der Dienstzentrale 5 gemäss dem SICAP-Verfahren, welches unter anderem in der Patentschrift EP 689 368 beschrieben wurde.

In einem ersten Anwendungsbeispiel enthalten die standortspezifischen Daten Bestellnummern für Produkte, Dienstleistungen und/oder Informationsanforderungen, welche eine Produkteidentifizierung der betreffenden Produkte, Dienstleistungen oder Informationsanforderungen und eine zugehörige Lieferantenidentifizierung des betreffenden Lieferanten oder Dienstanbieters umfassen. Die standortspezifischen Bestellnummern können in einem Bestellverfahren gemäss der veröffentlichten Patentanmeldung WO 98/28900 verwendet werden, wobei die Bestellnummer vom Kommunikationsmodul 34, wie oben beschrieben, an die Dienstzentrale 5 übermittelt wird, wo die Bestellnummer mit Identifikationsdaten verknüpft wird, die den Benutzer des Mobilgeräts 3 betreffen und aus einer der Dienstzentrale 5 zugänglichen Netzwerkdatenbank bezogen werden und an den in der Bestellnummer angegebenen Lieferanten 8 beziehungsweise Dienstanbieter 8 weitergeleitet wird. Vor der Übermittlung der Bestellnummer vom Kommunikationsmodul 34 an die Dienstzentrale 5 können vom Benutzer gegebenenfalls noch weitere Informationen, die für die betreffende Bestellung von Bedeutung sind, zum Beispiel die Anzahl der zu bestellenden Objekte undloder Angaben über die Bezahlung und die Zahlungsart, eingegeben werden und vom Kommunikationsmodul 34 zusammen mit der Bestellnummer an die Dienstzentrale 5 übermittelt werden. Die Weiterleitung der Bestelldaten von der Dienstzentrale 5 an den Dienstanbieter 8 kann beispielsweise über ein Festnetz 9 erfolgen, beispielsweise das öffentlich geschaltete Telefonnetz (Public Switched Telephone Network, PSTN), oder sie kann via einen Internetdienstanbieter 6 über das Internet 7 erfolgen. Bestellte Produkte und Informationen, wie beispielsweise ausführbare Programme, zum Beispiel Java Applets, verschlüsselte Zutrittstoken, zum Beispiel für Veranstaltungen und Anlässe mit automatisierter Zutrittskontrolle, sowie angeforderte Daten aus einer Datenbank können vom Dienstanbieter (Lieferanten) 8 beispielsweise direkt über das Mobilnetz 4 auf das Mobilgerät 3 übertragen und dort entsprechend ausgeführt, abgespeichert, respektive angezeigt werden. Eine entsprechende Verrechnung der bezogenen Produkte, Informationen oder Dienstleistungen kann über ein Konto des betreffenden Benutzers abgewickelt werden, wobei sich dieses Konto beispielsweise auf einer Chipkarte 33 des Mobilgeräts 3 befindet und zum Beispiel einen vorausbezahlten Betrag enthält.

In einem zweiten Anwendungsbeispiel enthalten die standortspezifischen Daten URL-Adressen (Universal Resource Locator), welche vom Kommunikationsmodul 34 dazu verwendet werden können, eine durch die URL-Adresse adressierte Resource 8 im Internet 7 anzusteuern. Dies ist beispielsweise ein bestimmter Web-Site 8 oder eine bestimmte Home-Page 8 im Internet 7, die vom Kommunikationsmodul 34 über die Dienstzentrale 5 und über einen Internetdienstanbieter 6 angesteuert wird. Die Dienstzentrale 5 umfasst beispielsweise eine Kurzmeldungsdienstzentrale (Short Message Service Centre, SMSC), wobei die betreffende URL-Adresse zusammen mit entsprechenden Instruktionen, wie oben beschrieben beispielsweise gemäss dem SICAP-Verfahren, vom Mobilgerät 3 an die Dienstzentrale 5 geleitet werden und von dort durch einen speziellen Dienst mittels dem Internet Protokoll (IP) über einen Internetdienstanbieter 6 an die adressierte Resource 8 im Internet 7 geleitet werden. Die Dienstzentrale 5 kann beispielsweise auch mittels geeigneten Komponenten an das Signalisierungssystem des Mobilnetzes 4 angeschlossen sein, zum Beispiel mittels einem Home Location Register (HLR) an das Signalisierungssystem Nummer 7 (SS7), und zudem über geeignete Gateway- und/oder Konvertierungsfunktionen verfügen, um die durch die URL-Adresse adressierte Resource 8 im Internet 7 mittels dem Internet Protokoll (IP) über einen Internetdienstanbieter 6 Protokoll (IP) anzusteuern. Die angesteuerte Resource 8 im Internet 7 kann mittels geeigneten Browser-Funktionen des Verarbeitungsmoduls 36 auf der Anzeige 31 des Mobilgeräts dargestellt werden und vom Benutzer des Mobilgeräts 3 über die Bedienungselemente 32 navigiert werden.

In einem dritten Anwendungsbeispiel enthalten die standortspezifischen Daten ausführbare Programmdateien, zum Beispiel Java Applets, die im Verarbeitungsmodul 36 des Mobilgeräts 3 ausgeführt werden können. Der Benutzer des Mobilgeräts kann beispielsweise über die oben erwähnten Menufunktionen wählen, ob eine empfangene ausführbare Programmdatei direkt ausgeführt werden soll oder ob sie bloss im Speichermodul 35 abgespeichert und zu einem späteren Zeitpunkt ausgeführt werden soll.

Je nach Vertraulichkeitsgrad der programmbegleitenden Daten können diese beispielsweise unter Zuhilfenahme von Sicherheitsdiensten vom Radiosender 1 auf die Mobilgeräte 3, respektive vom Mobilgerät 3 auf die Dienstzentrale 5, übertragen werden, dazu können beispielsweise das TTP-Verfahren (Trusted Third Party) oder ein PTP-Verfahren (Point-to-Point) eingesetzt werden.

Wie bereits oben angedeutet, können die empfangenen und gefilterten standortspezifischen Daten beispielsweise Werbeinformationen betreffend einen bestimmten Stand in einem Messe- oder Ausstellungsgelände enthalten oder sich auf eine bestimmte Verkaufsstelle und/oder Vertretung von Produkten und/oder Dienstleistungen beziehen, wobei die Werbeinformationen beispielsweise auch beschriebene Bestellnummern umfassen können. Die standortspezifischen Informationen können in einer weiteren Anwendung auch Erklärungen und Kommentare betreffend Ausstellungsgegenstände in einem Museum enthalten, die zusätzlich zu akustischen Informationen des Audioprogramms oder ersatzweise für hörbehinderte Personen gegeben werden. In einem mehrstöckigen Gebäude kann es zudem sinnvoll sein, dass die vom Radiosender 1 ausgesendeten programmbegleitenden Daten in den Ortsparametem auch eine Höhenangabe umfassen, und dass das Positionsbestimmungsmodul 39 zusätzlich zu den beschriebenen Positionsbestimmungsmitteln auch einen geeigneten Höhenmesser umfasst, um auch die aktuelle Höhe zu bestimmen, so dass das oben beschriebene Filtermodul 37 zusätzlich auch die aktuelle Höhe zur Filterung von standortspezifischen Informationen aus den empfangenen programmbegleitenden Daten berücksichtigen kann. Die empfangenen und gefilterten standortspezifischen Daten können natürlich auch andere standortabhängige Informationen enthalten, wie beispielsweise ortsabhängige Tarife, Verkehrsinformationen, Orientierungshinweise, beispielsweise für Strassennetze und/oder freie Parklätze, Wetterdaten, Fahrpläne und Anschlusszeiten für öffentliche Verkehrsmittel, und viele mehr.

Die Anwendungsmöglichkeiten der beschriebenen Erfindung sowie der Inhalt und Verwendungszweck von standortspezifischen Informationen sind fast grenzenlos und keinesfalls nur auf die gegebenen Beispiele limitiert.

An dieser Stelle sollte auch erwähnt werden, dass das speziell ausgerüstete Mobilgerät 3, wie es hier beschrieben wurde, in einem einzigen umfassenden Gehäuse realisiert werden kann, dass es aber auch so ausgeführt werden kann, dass es mehrere voneinander trennbare Gehäuse umfasst, die jeweils bestimmte Module des beschriebenen Mobilgeräts beinhalten, welche Module über in diese Gehäuse eingebaute Schnittstellen entfernbar miteinander verbunden sind. In einem Ausführungsbeispiel umfasst ein erstes Gehäuse zum Beispiel solche Module, die in einem herkömmlichen Mobilgerät enthalten sind, zum Beispiel ein Kommunikationsmodul 34, eine Anzeige 31 und Bedienungselemente 32, während ein zweites Gehäuse Module wie einen Radioempfänger 38 zum Empfang von programmbegleitenden Daten, ein Positionsbestimmungsmodul 39 und ein Filtermodul 37 umfasst. Die oben erwähnte Schnittstelle ist beispielsweise eine geeignete kontaktbehaftete Schnittstelle oder eine kontaktlose Schnittstelle, zum Beispiel eine induktive Schnittstelle, eine Infrarotschnittstelle, oder insbesondere eine hochfrequente Schnittstelle, beispielsweise eine sogenannte "Bluetooth"-Schnittstelle, die z.B. bei 2.4GHz arbeitet. Der Fachmann wird verstehen, dass es verschiedene Konfigurationsmöglichkeiten für solche Module gibt.

Neben speziell ausgerüsteten Mobilgeräten 3, wie sie hier beschrieben wurden, können einem interessierten Benutzer auch verschiedene geeignete Erweiterungsmodule, welche über mindestens gewisse der beschriebenen speziellen Funktionsmodule verfügen und beispielsweise an herkömmliche Mobilgeräte angeschlossen werden können, verkauft und/oder vermietet werden oder es können einem interessierten Benutzer, der über ein Mobilgerät mit den geeigneten Hardwaremodulen verfügt, gegen Bezahlung geeignete Softwaremodule zur Ausführung des beschriebenen Verfahrens in das Speichermodul dieses Mobilgeräts geladen werden.

## Patentansprüche

1. Tragbares Mobilgerät (3), welches einen Radioempfänger (38) umfasst, mittels welchem Radioprogramme mit programmbegleitenden digitalen Daten empfangbar sind, wobei mindestens gewisse der empfangenen programmbegleitenden Daten Ortsparameter umfassen, und welches Mobilgerät (3) ein Positionsbestimmungsmodul (39) zur Bestimmung der aktuellen geografischen Position des Mobilgeräts (3) umfasst, **dadurch gekennzeichnet,**
**dass** es ein mit dem Radioempfänger (38) und mit dem Positionsbestimmungsmodul (39) verbundenes Filtermodul (37) umfasst, mittels welchem auf Grund einer aktuellen, durch das genannte Positionsbestimmungsmodul (39) bestimmten geografischen Position standortspezifische Informationen aus den genannten mindestens gewissen empfangenen programmbegleitenden Daten filterbar sind.

2. Mobilgerät (3) gemäss vorhergehendem Anspruch, **dadurch gekennzeichnet, dass** das genannte Positionsbestimmungsmodul (39) ein satellitenbasiertes Positionierungssystem oder ein terrestrisches Positionierungssystem umfasst, oder dass das Mobilgerät (3) ein Mobilfunkgerät ist, welches in einem Mobilnetz (4) kommunikationsfähig ist, und das genannte Positionsbestimmungsmodul (3) so eingerichtet ist, dass es Positionsangaben aus dem genannten Mobilnetz (4) bezieht.

3. Mobilgerät (3) gemäss einem der vorhergehenden Ansprüche, **dadurch gekennzeichnet, dass** es ein Speichermodul (35) umfasst, in welchem ein Benutzerprofil gespeichert ist, auf Grund von welchem Benutzerprofil genannte empfangene programmbegleitende Daten durch das genannte Filtermodul (37) filterbar sind.

4. Mobilgerät (3) gemäss einem der vorhergehenden Ansprüche, **dadurch gekennzeichnet, dass** es eine Anzeige (31) umfasst, auf welcher gefilterte programmbegleitende Daten anzeigbar sind, und dass es Bedienungselemente (32) umfasst, mittels welchen gefilterte programmbegleitende Daten selektierbar und editierbar sind.

5. Mobilgerät (3) gemäss einem der vorhergehenden Ansprüche, **dadurch gekennzeichnet, dass** es ein Kommunikationsmodul (34) umfasst, mittels welchem selektierte, gefilterte programmbegleitende Daten an eine Dienstzentrale (5) übermittelbar sind.

6. Mobilgerät (3) gemäss einem der vorhergehenden Ansprüche, **dadurch gekennzeichnet, dass** das genannte Mobilgerät (3) ein Kommunikationsmodul (34) umfasst, mittels welchem eine durch eine in den genannten empfangenen programmbegleitenden Daten enthaltene URL-Adresse adressierte Resource (8) im Internet (7) ansteuerbar ist.

7. Mobilgerät (3) gemäss einem der vorhergehenden Ansprüche, **dadurch gekennzeichnet, dass** das genannte Mobilgerät (3) ein Verarbeitungsmodul (36) umfasst, in welchem in den genannten empfangenen programmbegleitenden Daten enthaltene ausführbare Programmdateien, ausführbar sind.

8. Verfahren zum Empfangen und Verarbeiten von programmbegleitenden digitalen Daten, die von einem Radiosender (1) ausgestrahlt werden und von denen mindestens gewisse Ortsparameter umfassen, in welchem Verfahren genannte programmbegleitende Daten von einem tragbaren Mobilgerät (3) mittels eines Radioempfängers (38) empfangen werden, und in welchem Verfahren das genannte Mobilgerät (3) mittels eines Positionsbestimmungsmoduls (39) seine aktuelle geografische Position bestimmt, **dadurch gekennzeichnet,**
**dass** das genannte Mobilgerät (3) mittels eines mit dem Radioempfänger (38) und mit dem Positionsbestimmungsmodul (39) verbundenen Filtermoduls (37) auf Grund der bestimmten aktuellen geografischen Position standortspezifische Informationen aus den genannten empfangenen programmbegleitenden Daten filtert.

9. Verfahren gemäss vorhergehendem Anspruch, **dadurch gekennzeichnet, dass** das genannte Positionsbestimmungsmodul (39) die genannte aktuelle Position mittels eines satellitenbasierten oder eines terrestrischen Positionierungssystems bestimmt, oder dass das genannte Positionsbestimmungsmodul (39) Angaben über die aktuelle Position aus einem Mobilnetz (4) bezieht.

10. Verfahren gemäss einem der Ansprüche 8 oder 9, **dadurch gekennzeichnet, dass** genannte empfangene programmbegleitende Daten vom genannten Filtermodul (37) auf Grund eines in einem Speichermodul (35) des genannten Mobilgeräts (3) gespeicherten Benutzerprofils gefiltert werden.

11. Verfahren gemäss einem der Ansprüche 8 bis 10, **dadurch gekennzeichnet, dass** gefilterte programmbegleitende Daten auf einer Anzeige (31) des Mobilgeräts (3) angezeigt werden, und dass gefilterte programmbegleitende Daten mittels Bedienungselementen (32) des genannten Mobilgeräts (3) selektiert werden.

12. Verfahren gemäss einem der Ansprüche 8 bis 11, **dadurch gekennzeichnet, dass** selektierte, gefilterte programmbegleitende Daten mittels eines Kommunikationsmoduls (34) des genannten Mobilgeräts (3) an eine Dienstzentrale (5) übermittelt werden.

13. Verfahren gemäss einem der Ansprüche 8 bis 12, **dadurch gekennzeichnet, dass** mindestens gewisse der genannten empfangenen programmbegleitenden Daten eine URL-Adresse enthalten und dass von einem Kommunikationsmodul (34) des genannten Mobilgeräts (3) eine durch eine selektierte genannte URL-Adresse adressierte Resource (8) im Internet (7) angesteuert wird.

14. Verfahren gemäss einem der Ansprüche 8 bis 13, **dadurch gekennzeichnet, dass** mindestens gewisse der genannten empfangenen programmbegleitenden Daten ausführbare Programmdateien enthalten und dass eine selektierte genannte ausführbare Programmdatei in einem Verarbeitungsmodul (36) des genannten Mobilgeräts (3) ausgeführt wird.

## Claims

1. Portable mobile device (3), which includes a radio receiver (38), by means of which radio programs with program-accompanying digital data are receivable, at least certain of the received program-accompanying data containing location parameters, and which mobile device (3) includes a position locating module (39) for determining the current geographic position of the mobile device (3), **characterised**
**in that** it includes a filter module (37), connected to the radio receiver (38) and to the position locating module (39), by means of which, on the basis of a current geographic position determined by the said position locating module (39), location-specific information are filterable from the said at least certain received program-accompanying data.

2. Mobile device (3) according to the preceding claim, **characterised in that** the said position locating module (39) comprises a satellite-based positioning system or a terrestrial positioning system, or the mobile device is a mobile radio device which is capable of communicating in a mobile network (4), and the said position locating module (3) is set up in such a way that it obtains position indications from the said mobile network (4).

3. Mobile device (3) according to one of the preceding claims, **characterised in that** it includes a memory module (35) in which a user profile is stored, on the basis of which user profile said received program-accompanying data are filterable by the said filter module (37).

4. Mobile device (3) according to one of the preceding claims, **characterised in that** it includes a display (31) on which filtered program-accompanying data are displayable, and **in that** it includes operating elements (32) by means of which filtered program-accompanying data selectable and editable.

5. Mobile device (3) according to one of the preceding claims, **characterised in that** it includes a communications module (34), by means of which selected, filtered program-accompanying data are transmittable to a service centre (5).

6. Mobile device (3) according to one of the preceding claims, **characterised in that** the said mobile device (3) includes a communications module (34) by means of which a resource (8) in the Internet (7), addressed through a URL address obtained in the said received program-accompanying data, is able to be activated.

7. Mobile device (3) according to one of the preceding claims, **characterised in that** the said mobile device (3) includes a processing module (36) in which executable program data files, contained in the said received program-accompanying data, are executable.

8. Method for receiving and processing program-accompanying digital data which are transmitted by a radio transmitter (1) and at least certain of which include location parameters, in which method said program-accompanying data are received by a portable mobile device (3) by means of a radio receiver (38), and in which method the said mobile device (3) determines its current geographic position by means of a position locating module (39), **characterised**
**in that** the said mobile device (3) filters, by means of a filter module (37), connected to the radio receiver (38) and to the position locating module (39), location-specific information from the said received program-accompanying data on the basis of the determined current geographic position.

9. Method according to the preceding claim, **characterised in that** the said position locating module (39) determines the said current position by means of a satellite-based positioning system or a terrestrial positioning system, or the said position locating module (39) obtains indications about the current position from a mobile network (4).

10. Method according to one of the claims 8 or 9, **characterised in that** said received program-accompanying data are filtered by the said filter module (37) on the basis of a user profile stored in a memory module (35) of the said mobile device (3).

11. Method according to one of the claims 8 to 10, **characterised in that** filtered program-accompanying data are displayed on a display (31) of the mobile device (3), and filtered program-accompanying data are selected by means of operating elements (32) of the said mobile device (3).

12. Method according to one of the claims 8 to 11, **characterised in that** selected, filtered program-accompanying data are transmitted to a service centre (5) by means of a communications module (34) of the said mobile device (3).

13. Method according to one of the claims 8 to 12, **characterised in that** at least certain of the said received program-accompanying data contain a URL address, and **in that** a resource (8) in the Internet (7), addressed through a selected said URL address, is activated by a communications module (34) of the said mobile device (3).

14. Method according to one of the claims 8 to 13, **characterised in that** at least certain of the said received program-accompanying data contain executable program data files, and **in that** a selected said executable program data file is executed in a processing module (36) of the said mobile device (3).

## Revendications

1. Appareil mobile portable (3) comprenant un récepteur radiophonique (38) qui permet de recevoir des programmes radiophoniques comportant des données numériques accompagnant les programmes, au moins certaines de ces données reçues d'accompagnement de programmes comprenant des paramètres de position, et cet appareil mobile (3) possédant un module (39) de détermination de la position géographique de l'appareil mobile (3) à l'instant considéré, **caractérisé en ce**
**qu'**il comprend un module de filtrage (37), relié au récepteur radiophonique (38) et au module (39) de détermination de la position, et au moyen duquel des informations spécifiques de la position peuvent être extraites par filtrage des données définies comme "au moins certaines des données reçues d'accompagnement de programmes" sur la base d'une position géographique valable à l'instant considéré, déterminée par le module (39) de détermination de la position.

2. Appareil mobile (3) selon la revendication précédente, **caractérisé en ce que** le module (39) de détermination de la position comprend un système de positionnement à base de satellite(s) ou un système terrestre de positionnement, ou **en ce que** l'appareil mobile (3) est un poste radio mobile qui est capable de communiquer dans un réseau mobile (4) et que le module (39) de détermination de la position est réalisé de manière à obtenir du réseau mobile (4) des indications de position.

3. Appareil mobile (3) selon l'une des revendications précédentes, **caractérisé en ce qu'**il comprend un module de mémoire (35) dans lequel est enregistré un profil d'utilisateur sur la base duquel des données reçues d'accompagnement de programmes peuvent être filtrées par le module de filtrage (37).

4. Appareil mobile (3) selon l'une des revendications précédentes, **caractérisé en ce qu'**il comprend un écran (31) sur lequel peuvent être affichées des données d'accompagnement de programmes filtrées, et **en ce qu'**il comprend des organes de commande (32) au moyen desquels des données d'accompagnement de programmes filtrées peuvent être sélectionnées et mises au point.

5. Appareil mobile (3) selon l'une des revendications précédentes, **caractérisé en ce qu'**il comprend un module de communication (34) au moyen duquel des données filtrées et sélectionnées d'accompagnement de programmes peuvent être transmises à une centrale de services (5).

6. Appareil mobile (3) selon l'une des revendications précédentes, **caractérisé en ce qu'**il comprend un module de communication (34) au moyen duquel il peut se relier à une ressource (8) d'Internet (7) adressée par une adresse URL contenue dans les données reçues accompagnant les programmes.

7. Appareil mobile (3) selon l'une des revendications précédentes, **caractérisé en ce qu'**il comprend un module de traitement (36) dans lequel peuvent être exécutés des fichiers de programmes exécutables, contenus dans les données accompagnant des programmes qui ont été reçues.

8. Procédé de réception et de traitement de données numériques accompagnant des programmes, qui sont émises par un émetteur radiophonique (1) et dont au moins certaines comprennent des paramètres de la position géographique, procédé dans lequel des données accompagnant les programmes sont reçues par un appareil mobile (3) portable au moyen d'un récepteur radiophonique (38), et dans lequel l'appareil mobile (3) détermine sa position géographique, à l'instant considéré, grâce à un module (39) de détermination de la position, **caractérisé en ce**
**que** l'appareil mobile (3) filtre, dans les données reçues accompagnant les programmes, des informations spécifiques du lieu considéré, sur la base de la position géographique instantanée qui a été déterminée, au moyen d'un module de filtrage (37) relié au récepteur radiophonique (38) et au module de positionnement (39).

9. Procédé selon la revendication précédente, **caractérisé en ce que** le module de positionnement (39) détermine la position instantanée au moyen d'un système de positionnement à satellite(s) ou terrestre, ou **en ce que** le module de positionnement (39) obtient d'un réseau mobile (4) des renseignements sur la position à l'instant considéré.

10. Procédé selon la revendication 8 ou 9, **caractérisé en ce que** les données reçues accompagnant les programmes sont filtrées par le module de filtrage (37) sur la base d'un profil de l'utilisateur qui est enregistré dans un module de mémoire (35) de l'appareil mobile (3).

11. Procédé selon l'une des revendications 8 à 10, **caractérisé en ce que** des données accompagnant les programmes, filtrées, sont affichées sur un écran (31) de l'appareil mobile (3), et **en ce que** des données accompagnant les programmes, filtrées, sont sélectionnées au moyen d'organes de commande (32) de l'appareil mobile (3).

12. Procédé selon l'une des revendications 8 à 11, **caractérisé en ce que** des données accompagnant les programmes, filtrées et sélectionnées, sont envoyées à une centrale de services (5) au moyen d'un module de communication (34) de l'appareil mobile (3).

13. Procédé selon l'une des revendications 8 à 12, **caractérisé en ce qu'**au moins certaines des données accompagnant les programmes qui ont été reçues contiennent une adresse URL, et **en ce qu'**un module de communication (34) de l'appareil mobile (3) se met en liaison avec une ressource (8) d'Internet (7) adressée par une adresse URL mentionnée sélectionnée.

14. Procédé selon l'une des revendications 8 à 13, **caractérisé en ce qu'**au moins certaines des données accompagnant les programmes qui ont été reçues contiennent des fichiers de programmes exécutables et **en ce qu'**un fichier de programme exécutable sélectionné est exécuté dans un module de traitement (36) de l'appareil mobile (3).
